**Europäisches Patentamt**

**European Patent Office**

**Office européen des brevets**

(11) Veröffentlichungsnummer: **0 044 390**
**A2**

(12) **EUROPÄISCHE PATENTANMELDUNG**

(21) Anmeldenummer: **81104048.4**

(22) Anmeldetag: **26.05.81**

(51) Int. Cl.³: **F 03 D 3/00**

(30) Priorität: **17.07.80 ES 493471**

(43) Veröffentlichungstag der Anmeldung:
**27.01.82 Patentblatt 82/4**

(84) Benannte Vertragsstaaten:
**AT BE CH DE FR GB IT LI LU NL SE**

(71) Anmelder: **Parra, José Martinez**
**Calle Salitre 33-1**
**Edificio Juan XXIII Cartagena (Murcia)(ES)**

(72) Erfinder: **Parra, José Martinez**
**Calle Salitre 33-1**
**Edificio Juan XXIII Cartagena (Murcia)(ES)**

(74) Vertreter: **Vossius.Vossius.Tauchner.Heunemann.Rauh**
**Siebertstrasse 4 P.O. Box 86 07 67**
**D-8000 München 86(DE)**

(54) **Vorrichtung zur Erzeugung von elektrischer Energie aus Windenergie.**

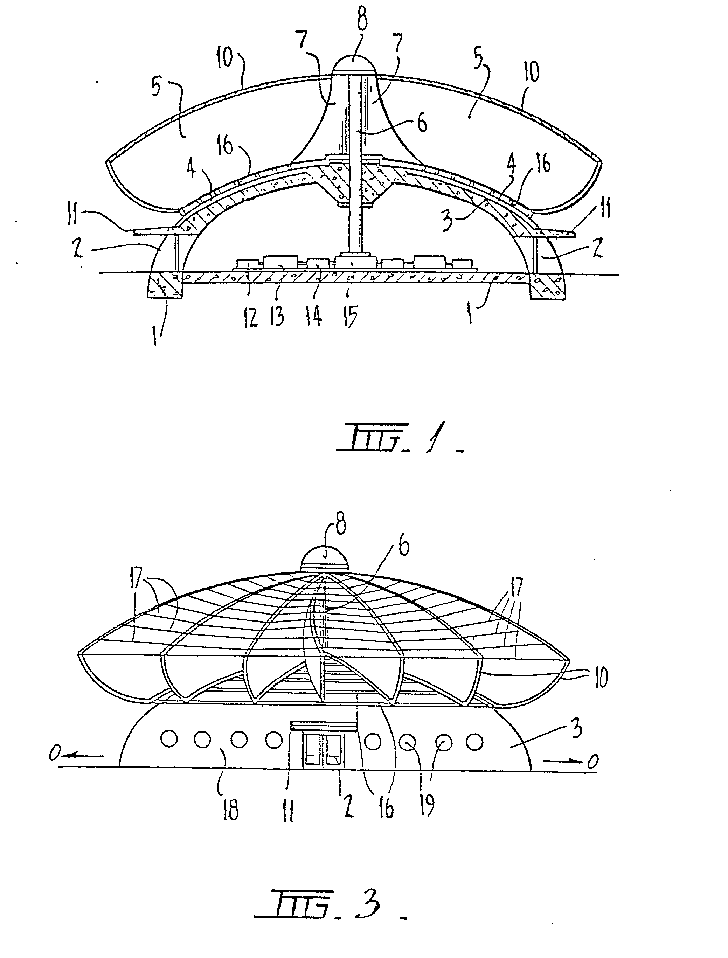

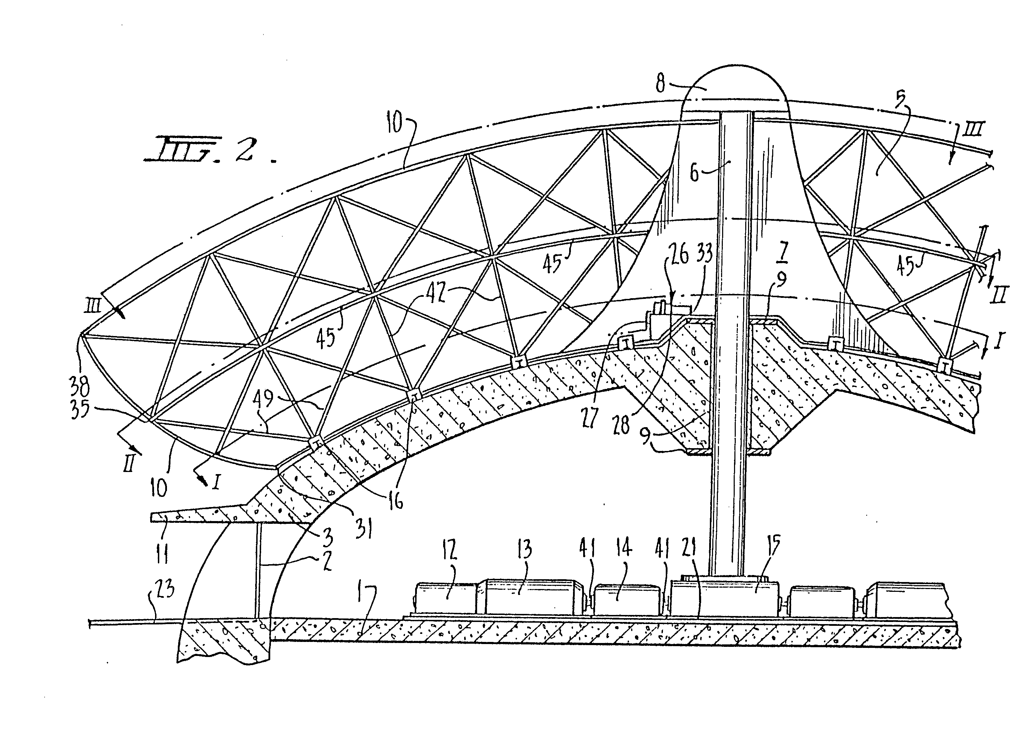

(57) Gegenstand der Erfindung ist eine Vorrichtung zur Erzeugung von elektrischer Energie aus Windenergie, die aus einem kuppelförmigen Gebäude (3) und einem auf diesem angebrachten großen Flügelrad (5) besteht. Das Flügelrad (5) ist in seiner Form an der Krümmung des kuppelförmigen Gebäudes angepaßt. Es stützt sich über Laufrollen (71) und Schienen (16) auf die Oberfläche des kuppelförmigen Gebäudes. Im Bereich der Laufrollen (71) und Schienen (16) sind Einrichtungen zum Bremsen und Festhalten der Flügel vorgesehen. Die Drehbewegung des Flügelrades wird über eine zentrale Achse (6) auf eine im Inneren des kuppelförmigen Gebäudes (3) angeordnete Maschineneinrichtung (12) bis (15) zur Erzeugung von elektrischer Energie übertragen. Die Vorrichtung der Erfindung zeichnet sich trotz ihrer großen Dimensionen durch überragende Stabilität aus; vgl. Figur 2.

Fig. 2.

VOSSIUS · VOSSIUS · TAUCHNER · HEUNEMANN · RAUH

PATENTANWÄLTE

SIEBERTSTRASSE 4 · 8000 MÜNCHEN 86 · PHONE: (089) 47 40 75
CABLE: BENZOLPATENT MÜNCHEN · TELEX 5-29 453 VOPAT D

0044390

26. Mai 1981

u.Z.: R 099 EP (RA/kä)
Case: 493 471

JOSE MARTINEZ PARRA
Cartagena, Murcia, Spanien

" Vorrichtung zur Erzeugung von elektrischer Energie aus
Windenergie "

Gegenstand der Erfindung ist eine Vorrichtung zur Erzeugung von elektrischer Energie aus Windenergie.

Die Umwandlung der Bewegungsenergie eines sich drehenden
Flügelrades oder Rotors mittels eines Generators in
elektrische Energie ist bekannt. Bekannt ist auch das
Prinzip, das Flügelrad oder den Rotor durch Windkraft
in eine Drehbewegung zu versetzen. Wenn jedoch die Erzeugung von elektrischer Energie in größerem Maßstab beabsichtigt ist, dann sind dafür großdimensionierte Anlagen
erforderlich, um eine ausreichende Menge an Windenergie
erfassen zu können. Insbesondere infolge der häufig ungleichmäßigen Stärke des Windes treten aber bei Anlagen
mit großen Flügelrädern erhebliche Probleme mit der
Stabilität der Anordnungen auf. Häufig kann eine annähernd gleichmäßige Drehbewegung bei unterschiedlicher
Windstärke nicht sichergestellt werden. Bei stärkeren
Böen besteht überdies die Gefahr, daß die großdimensionierten Flügel aus ihren Halterungen gerissen oder verbogen
werden.

Der Erfindung liegt die Aufgabe zugrunde, eine Vorrichtung zur Erzeugung von elektrischer Energie aus Windenergie zu schaffen, die in stabiler Bauweise als großdimensionierte Anlage ausgeführt werden kann und mit der auch bei ungleichmäßigem Wind eine verhältnismäßig konstante Drehbewegung des Flügelrades erreicht wird, und die gegen ein Verbiegen oder Herausreißen der Flügel des Flügelrades aus ihren Halterungen gesichert ist. Diese Aufgabe wird durch die Erfindung gelöst.

Gegenstand der Erfindung ist demnach eine Vorrichtung zur Erzeugung von elektrischer Energie aus Windenergie, die gekennzeichnet ist durch ein kuppelförmiges Gebäude, auf dem sich ein Flügelrad befindet, dessen vertikale Achse das kuppelförmige Gebäude an seiner höchsten Stelle durchstößt und die Bewegung des Flügelrades auf eine Einrichtung zur Umwandlung der Bewegungsenergie des Flügelrades in elektrische Energie überträgt, wobei zumindest die Unterkante der Flügel des Flügelrades an die Krümmungsform des kuppelförmigen Gebäudes angepaßt ist und die Flügel auf Schienen abgestützt sind und von diesen gehalten werden, die am Aufbau des kuppelförmigen Gebäudes derart verankert sind, daß sie konzentrische Kreise um dessen höchsten Punkt beschreiben.

Die Vorrichtung der Erfindung ermöglicht infolge der stabilen Bauart und der nachstehend beschriebenen Verspannung und Verankerung der Flügel des Flügelrades den Bau einer großdimensionierten Anlage und damit die Gewinnung einer erheblichen Menge an elektrischer Energie durch Nutzbarmachung einer großen Menge an Windenergie. Durch die erfindungsgemäße Ausführung des Flügelrades wird ferner infolge seines großen Durchmessers und der mit seinem Gewicht verbundenen erheblichen Trägheit eine von kurzfristigen Änderungen der Windstärke weitgehend unabhängige, annähernd von der mittleren Windstärke abhängige gleichmäßige Drehbewegung erreicht. Die Reibungsverluste der Vorrichtung der Erfindung werden durch die vorgesehene Ausführung des Flügelrades und seiner Abstützung auf dem kuppelförmigen Gebäude verhältnismäßig gering gehalten, so daß ein hoher Wirkungsgrad der Umwandlung der Bewegungsenergie des Flügelrades in elektrische Energie erreicht werden kann.

Eine Ausführungsform der Vorrichtung der Erfindung zur Erzeugung von elektrischer Energie aus Windenergie ist in den beiliegenden Figuren dargestellt. Es zeigen:

Fig. 1 einen vertikalen Schnitt durch die Vorrichtung;

Fig. 2 einen vergrößerten Ausschnitt von Fig. 1 mit einer Ausführungsform eines Flügels des Flügelrades;

Fig. 3 eine Seitenansicht der Vorrichtung;

Fig. 4 einen horizontalen Schnitt durch die Vorrichtung in Höhe der Linie O-O von Fig. 3;

Fig. 5 eine Aufsicht auf die Ausführungsform der Vorrichtung gemäß Fig. 1 und 3;

Fig. 6 eine Aufsicht auf die Ausführungsform der Vorrichtung gemäß Fig. 2 in Richtung der Achse des Flügelrades auf die in Fig. 2 schematisch eingezeichnete Schnittfläche I-I;

Fig. 7 eine Aufsicht gemäß Fig. 6 auf die in Fig. 2 schematisch eingezeichnete Schnittfläche II-II;

Fig. 8 eine Aufsicht gemäß Fig. 6 auf die in Fig. 2 schematisch eingezeichnete Schnittfläche III-III;

Fig. 9-12 schematische Ansichten einer Ausführungsform einer Lauf-, Brems- und Festhalteeinrichtung der Flügel des Flügelrades:

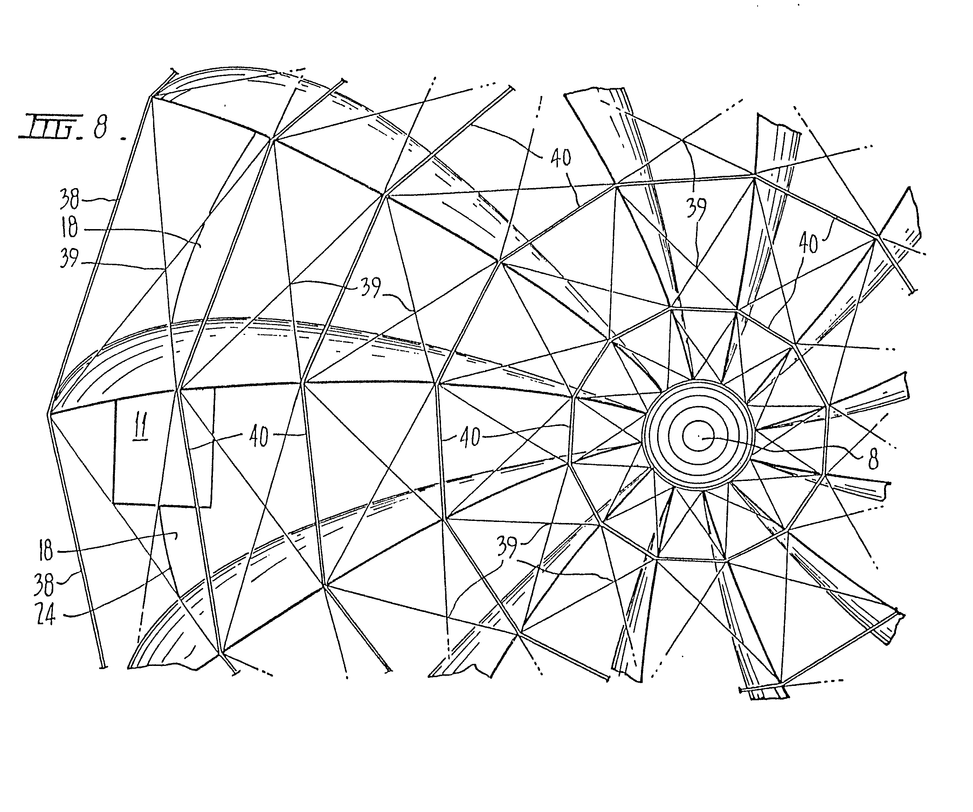

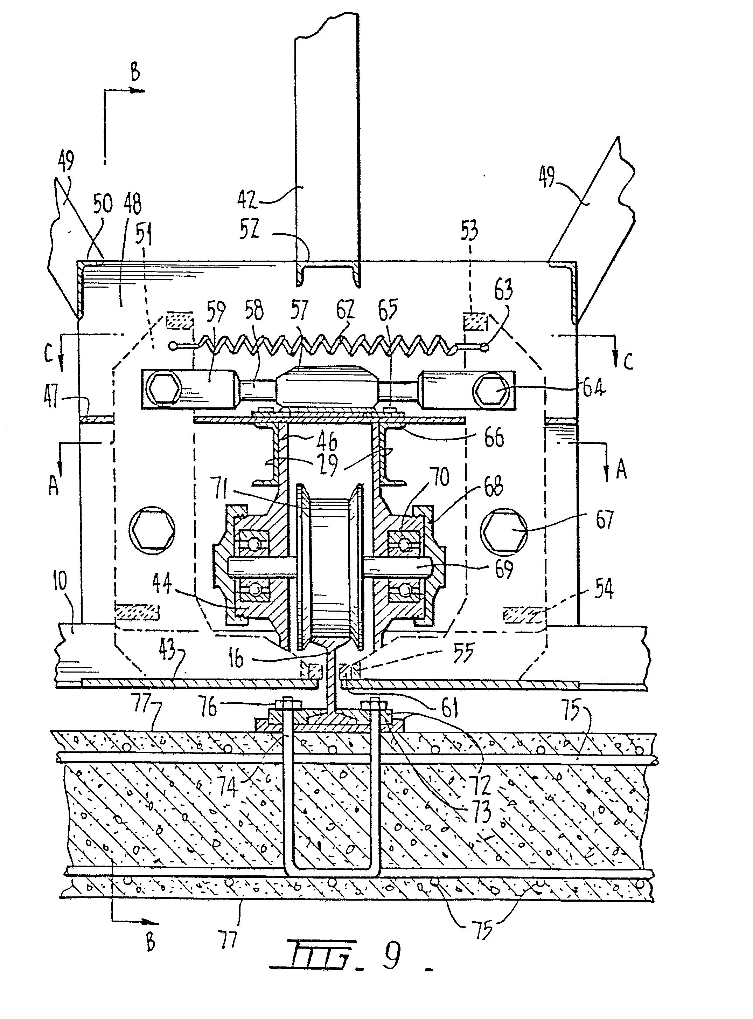

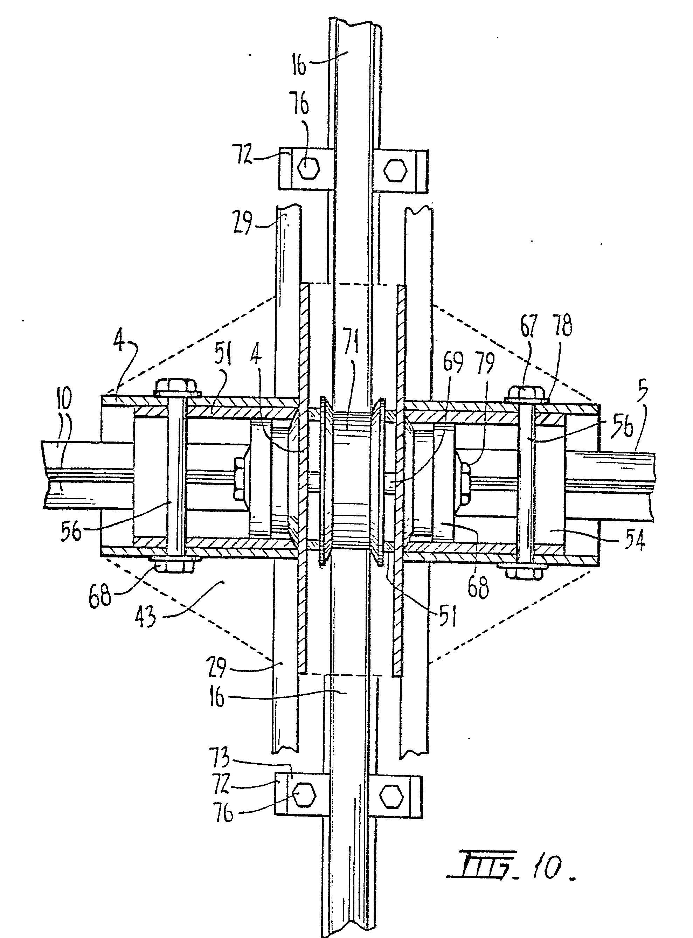

Fig. 9 ist ein Schnitt durch die Einrichtung, der eine
Ebene parallel zur Fläche des Flügels zeigt,

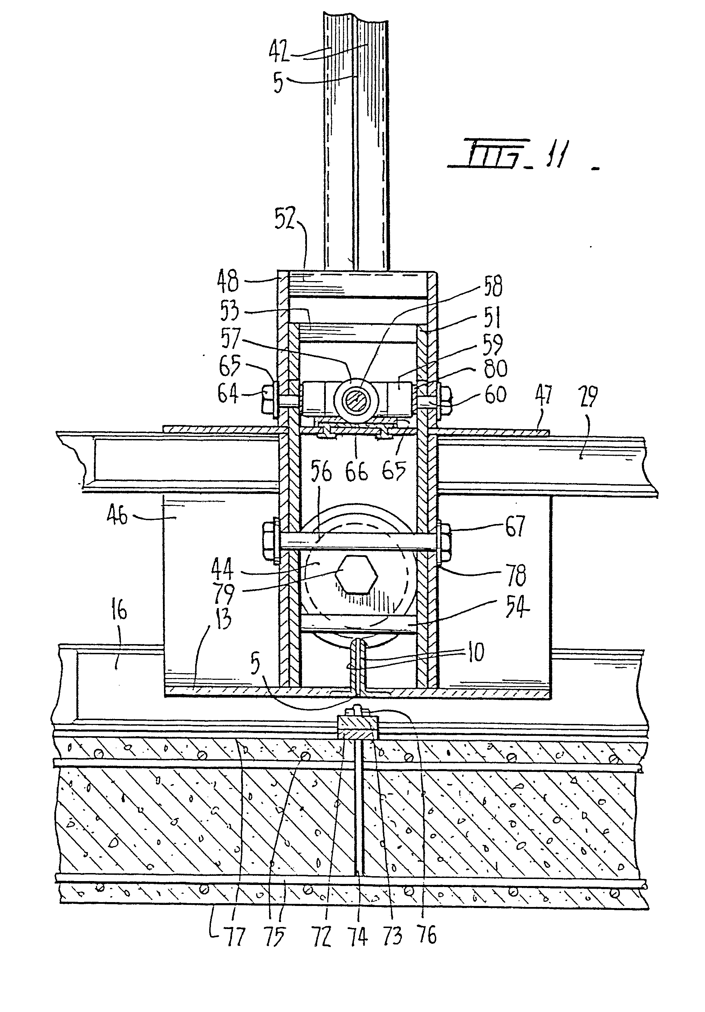

Fig. 10 ist ein Schnitt durch die Einrichtung längs
der Linie A-A in Fig. 9 mit Blick in Richtung auf
die Oberfläche des k-ppelförmigen Gebäudes.

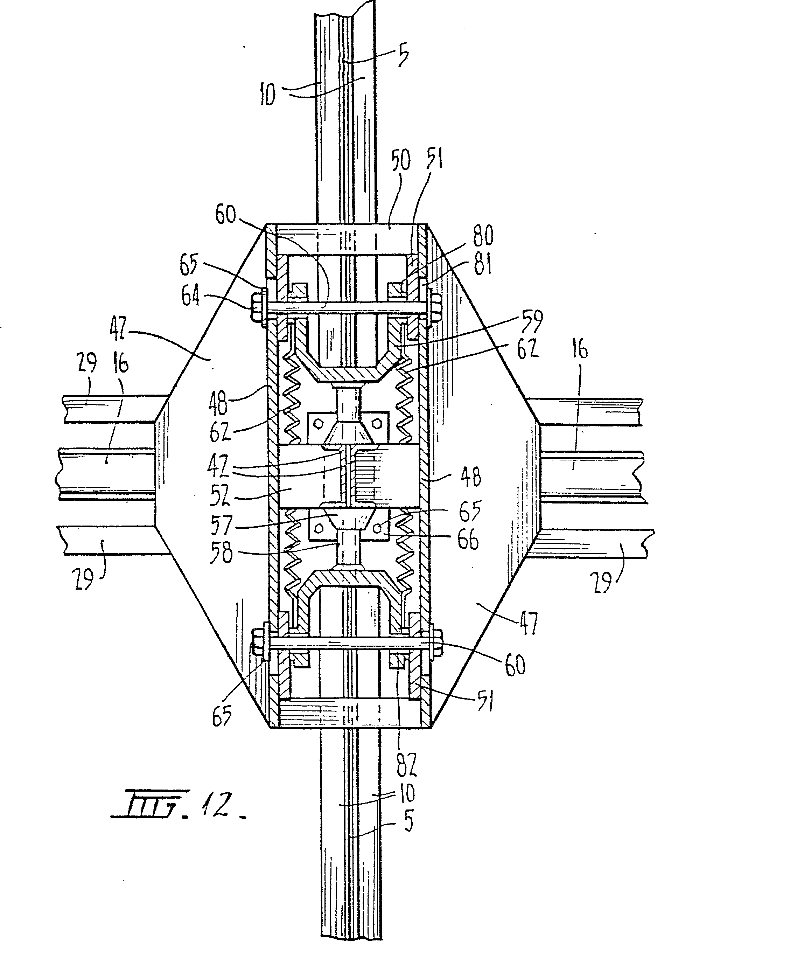

Fig. 11 ist ein Schnitt durch die Einrichtung längs der
Linie B-B in Fig. 9 mit Blick in Pfeilrichtung

Fig. 12 ist ein Schnitt durch die Einrichtung längs der
Linie C-C von Fig. 9 mit gleicher Blickrichtung
wie Fig. 10.

Die Vorrichtung der Erfindung wird zweckmäßigerweise an
geographisch geeigneten Orten aufgestellt, d.h. an solchen
Orten, wo häufig verhältnismäßig starke Winde auftreten
und deshalb eine große Menge an Energie nutzbar zu machen
ist. Die Einrichtungen der Vorrichtung der Erfindung werden in und auf einem festen Gebäude angebracht, das einen
wesentlichen Teil der Vorrichtung bildet und einen kreisförmigen Grundriß aufweist, wobei sein Oberteil die Form
einer großen Kuppel hat.

Das kuppelförmige Gebäude ist aus armiertem Beton mit
einem Rippenwerk aus Verstärkungen aufgebaut: Dies gilt
auch für die Fundamente und die Gestelle und Podeste für
die gesamte Maschineneinrichtung und die Generatoren, die
einzubauen sind. In Bezug auf das kuppelförmige Gebäude ist zu berücksichtigen, daß es mit dem nötigen Sicherheitsfaktor in seinen äußeren Bauteilen sein
eigenes Gewicht und die Drucke aushalten muß, denen das
Gebäude als Folge seiner Masse und der Bewegung des großdimensionierten Flügelrades unterliegt, das an seinem
oberen Teil angebracht ist.

Vorzugsweise ist die Vorrichtung der Erfindung von einer
weiten ebenen Fläche umgeben, deren Hauptzweck neben der
Schaffung von notwendigen Freiflächen für Zugänge und Platz für die Lagerung von schwerem Material darin besteht, daß dem Weg des Windes keine Hindernisse entgegenstehen, um seine Wirkung auf die Flügel des Flügelrades zu erleichtern.

Die mit der Vorrichtung der Erfindung verbundene Transformatoranlage wird aus dem vorstehend genannten Grund auf einer anderen, tieferliegenden Ebene aufgestellt.

Von besonderer Bedeutung innerhalb der Vorrichtung der Erfindung ist die Konstruktion des kuppelförmigen Gebäudes und insbesondere des auf ihm angebrachten Flügelrades. Die Flügel oder Schaufeln des Flügelrades sind sowohl in Längs- als auch in Querrichtung gewölbt. Zur Erzielung eines Höchstmaßes an Stabilität sind die Flügel durch Profile an ihrem gesamten Umfang verstärkt. Weitere Profile sind auch quer über die Fläche der Flügel angebracht. Die Flügel des Flügelrades bestehen aus einem Werkstoff geeigneter Festigkeit, beispielsweise einem Metall, wie Aluminium. Dies gilt sowohl für die Flügelblätter, als auch für die Verstärkungsprofile.

Zur Erhöhung der Stabilität der Anlage sind die Flügel des Flügelrades miteinander durch Seile, vorzugsweise aus Stahl, verbunden und verspannt. Diese Seile sind zwischen den Oberkanten, dem mittleren Bereich und den Unterkanten der Flügel des Flügelrades in gleichbleibender Höhe angebracht. In einer bevorzugten Ausführungsform ist die Verspannung noch dadurch verstärkt, daß zusätzlich Seile auch zwischen der Oberkante eines Flügels und dem mittleren Bereich der benachbarten Flügel sowie zwischen dem mittleren Bereich eines Flügels und der Unterkante der benachbarten Flügel bzw. umgekehrt vorgesehen sind.

Ein wesentliches Merkmal der Vorrichtung der Erfindung besteht in der gegenseitigen Anpassung der Formen des kuppelförmigen Gebäudes und des Flügelrades. Das Flügelrad hat vorzugsweise einen Durchmesser, der mindestens so groß ist wie derjenige des kuppelförmigen Gebäudes. Zumindest die Unterkanten der Flügel des Flügelrades sind in ihrer Form so ausgebildet, daß sie an die Krümmung der Abdeckung des kuppelförmigen Gebäudes angepaßt sind. Damit wird die Möglichkeit geschaffen, daß die Flügel des Flügelrades in günstiger Weise auf dem kuppelförmigen Gebäude abgestützt werden können. Der Abstand zwischen der Unterkante der Flügel des Flügelrades und der Oberfläche des kuppelförmigen Gebäudes wird möglichst klein gehalten, damit der Wind nur einen möglichst kleinen Durchgang findet. Vorzugsweise ist auch die Oberkante der Flügel des Flügelrades an die Krümmung des kuppelförmigen Gebäudes angepaßt, so daß der gesamte Aufbau ein gewölbtes, kuppelartiges Aussehen hat. Damit wird ein besonders günstiges aerodynamisches Verhalten der Vorrichtung erreicht.

Die erfindungsgemäße Formgebung der Flügel des großdimensionierten Flügelrades erfolgt auch mit dem Ziel, daß Einrichtungen geschaffen werden können, mit denen das beträchtliche Gewicht der Flügel des Flügelrades auf dem kuppelförmigen Gebäude abgestützt und die Flügel, beispielsweise bei plötzlichen Änderungen der Windstärke, in ihrer Position gehalten werden können. Dadurch wird ein Abheben der Flügel und eine Zerstörung der Anlage vermieden.

Auf der Oberfläche des kuppelförmigen Gebäudes sind in Form von zum Mittelpunkt des Gebäudes konzentrischen Ringen Schienen angebracht und verankert, auf denen die Flügel des Flügelrades abgestützt sind. Die Schienen haben die Form eines doppelten T-Trägers. Entsprechende Einrichtungen in den Unterkanten der Flügel des Flügelrades umgreifen das obere T der Schienen, während ein Rad mit einer Lauffläche aus Gummi auf den Schienen läuft. Damit wird ein weitgehend schwingungsfreier Betrieb der Anlage ermöglicht, was einen wesentlichen Beitrag zur Stabilität der Vorrichtung leistet. Durch die das Oberteil der Schiene umgreifenden Einrichtungen an der Unterkante des Flügels wird ein Abheben oder Ausbrechen des Flügels verhindert. Diese Lauf- und Festhalteeinrichtungen sind ferner mit mechanisch oder hydraulisch zu betätigenden Bremseinrichtungen versehen, mit deren Hilfe die Drehbewegung des Flügelrades angehalten werden kann. Eine Ausführungsform der erfindungsgemäßen Lauf-, Brems- und Festhalteeinrichtungen der Flügel des Flügelrades wird nachstehend im Zusammenhang mit den Zeichnungen näher erläutert.

Auf der Oberfläche des kuppelförmigen Gebäudes befinden sich mehrere konzentrisch angeordnete Schienenstränge. Ihre Zahl und ihr genauer Abstand voneinander ist nicht besonders kritisch. Aus Gründen der Stabilität des Flügelrades ist jedoch ein Abstand von etwa 5 m zwischen den einzelnen Schienensträngen bevorzugt.

Dadurch, daß die Flügel des Flügelrades mittels Rädern oder Rollen auf den auf dem kuppelförmigen Gebäude verankerten Schienen laufen, wird ein weitgehend reibungsfreier Betrieb des Flügelrades ermöglicht. Die verhältnismäßig große Masse und entsprechende Trägheit des Flügelrades halten dieses auch bei vorübergehendem Nachlassen des Windes noch für einige Zeit in Bewegung.

Die Drehbewegung des Flügelrades wird durch seine zentrale Achse, die das kuppelförmige Gebäude an seiner höchsten Stelle durchstößt, auf ein Getriebe übertragen, das einen Teil der Maschineneinrichtung zur Umwandlung von Bewegungsenergie in elektrische Energie darstellt. Diese Maschineneinrichtung ist im Inneren des kuppelförmigen Gebäudes untergebracht. Sie besteht neben dem Hauptgetriebe aus Einrichtungen zur automatischen Steuerung der Drehzahl des Flügelrades und/oder der nachgeschalteten Generatoren zur Erzeugung elektrischer Energie, um optimale Betriebsbedingungen im Hinblick auf die gegebene Windstärke zu erzielen. Falls die Generatoren Gleichstromgeneratoren sind, können ihnen elektromechanisch oder elektronisch arbeitende Wechselstromerzeuger, wie Gleichstrom-Wechselstrom-Wandler (Gleichstrommotor mit nachgeschaltetem Wechselstromgenerator) oder Wechselrichter, nachgeschaltet werden.

Eine wesentliche Charakteristik der erfindungsgemäßen Vorrichtung besteht demnach in der Bauart des kuppelförmigen Gebäudes und des Flügelrades. Infolge seiner verhältnismäßig geringen Höhe und seiner Festigkeit ist erfindungsgemäß die Errichtung eines sehr groß dimensionierten Flügelrades ermöglicht, das den Wind nutzbar machen kann, unabhängig von der Richtung, aus der er kommt. Durch die Bewegung des Flügelrades wird eine erhebliche Bewegungsenergie erzeugt, die die Umwandlung in eine ebenfalls erhebliche Menge an elektrischer Energie in wirtschaftlicher Weise möglich macht.

Die Vorrichtung der Erfindung wird nun anhand der in der Zeichnung dargestellten Ausführungsform näher erläutert.

Figur 1 stellt einen vertikalen Schnitt durch die Vorrichtung der Erfindung dar und zeigt ihre wesentlichen Elemente. In der Figur 1 bezeichnet 1 die Fundamente des Gebäudes, 2 die Eingangstüren in das Gebäude und 3 den Oberteil des kuppelförmigen Gebäudes, der in bewehrtem Beton (Stahlbeton) ausgeführt ist und die erforderliche Festigkeit für die zu überspannende lichte Weite und das zu tragende Gewicht aufweist. In 3 ist im Längsschnitt eine tragende Rippe dargestellt. 4 bezeichnet die abschließende Decke des kuppelförmigen Gebäudes, die wie die tragenden Rippen aus Stahlbeton besteht. Die Schaufeln oder Flügel des Flügelrades 5 sind sowohl in Längs- als auch in Querrichtung gekrümmt. Das Flügelrad 5 besteht aus Aluminium, und zwar sowohl seine Strukturbewehrung als auch die Flügel. 6 stellt die zentrale Achse dar, an der sich die Flügel des Flügelrades 5 vereinen. Diese Achse überträgt die kreisförmige Bewegung auf ein zentrales mechanisches Getriebe 15. 7 bezeichnet Verstärkungen, die an beiden Seiten der Schaufeln oder Flügel in den Bereich angebracht sind, wo sie mit der zentralen Achse 6 zusammenstoßen. Diese Verstärkungen sind vorzugsweise aus Stahl. Der verstärkte Bereich ist mit einer Abdeckung 8 versehen, die gleichzeitig den Oberteil der Achse schützt.

In dem Bereich, in dem die Achse 6 das kuppelförmige Gebäude 3 durchstößt, befinden sich Stoßplatten 9 aus Stahl, die mit dem Betonaufbau des kuppelförmigen Gebäudes 3 verbunden sind. Dort sind die Lager der zentralen Achse eingebaut. 10 bezeichnet ein um die Flügel umlaufendes Profil, das der Verstärkung der Flügel des Flügelrades 5 dient.

Über den Eingängen 2 in das Innere des kuppelförmigen Gebäudes befinden sich Schutzschirme 11 aus Stahlbeton, die einen Teil des gesamten Aufbaues des kuppelförmigen Gebäudes darstellen.

Im Inneren des kuppelförmigen Gebäudes 3 befinden sich die Vorrichtungen, mit denen aus der Bewegungsenergie des Flügelrades über die Achse elektrische Energie erzeugt wird. 12 stellt einen Wechselstromerzeuger und Verbindungskasten für die Ausgangskabel der elektrischen Energie dar. 13 ist der Generator und 14 die vorstehend erwähnte automatische Drehzahlsteuerung. 15 ist das Getriebe, das die Bewegungsenergie der Achse des Flügelrades aufnimmt.

Auf der Oberseite des Betonaufbaus des kuppelförmigen Gebäudes 3 sind Schienen 16 verankert. Auf diesen bewegen sich die erfindungsgemäßen Lauf-, Brems- und Festhalteeinrichtungen für das Flügelrad. Eine detaillierte Darstellung einer Ausführungsform dieser Verbindung von Flügel und Schiene zeigen die Fig. 9 bis 12.

Figur 2 zeigt einen vergrößerten Ausschnitt des vertikalen Schnitts durch die Vorrichtung der Erfindung gemäß Figur 1. Neben den bereits in Figur 1 dargestellten Elementen der Vorrichtung der Erfindung ist in Figur 2 insbesondere die Konstruktion eines Flügel des Flügelrades 5 in einer bevorzugten Ausführungsform zu erkennen. Der Flügel weist neben dem umlaufenden Verstärkungsprofil 10 in mittlerer Höhe ein Profil 45 sowie weitere, schräg verlaufende Profile 42 und 49 auf. Mit 26 ist eine zentrale hydraulische Einrichtung bezeichnet, die die Bremseinrichtungen des Flügelrades mit Druck versorgt. Die Einrichtung 26 kann irgendeine für diesen Zweck geeignete Einrichtung sein. Sie befindet sich auf einer Plattform 28, die von Stützen 27 getragen wird. Die Einrichtung 26 ist zwischen zwei der Flügel des Flügelrades angebracht und bewegt sich mit diesem im Kreis. 33 und 34 bezeichnen Stellen der Unterkante des Flügels, an denen das Profil 10 Winkel bildet, die sich an den verstärkten Bereich des kuppelförmigen Gebäudes 3 nahe der Achse 6 anpassen.

Die horizontale Achse, die die einzelnen Elemente des Maschinenparks miteinander verbindet, ist mit 41 bezeichnet.

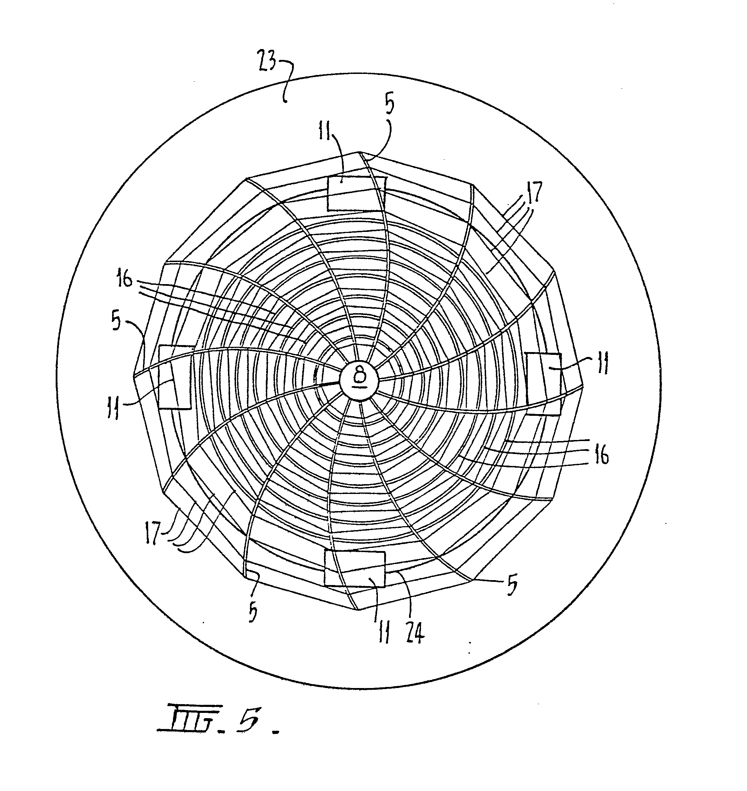

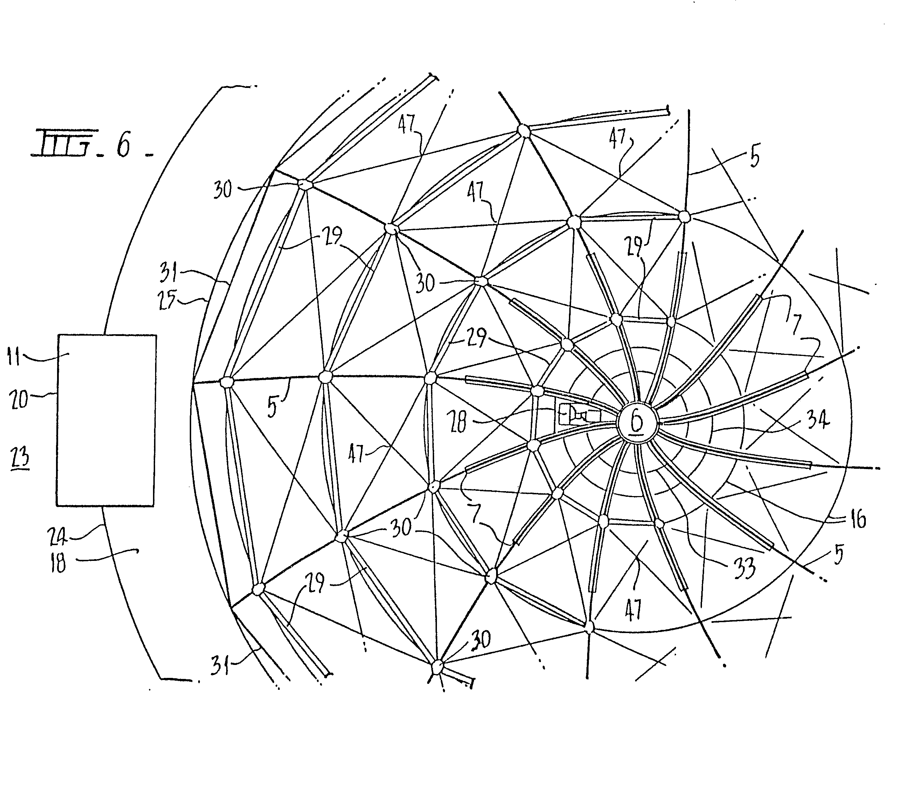

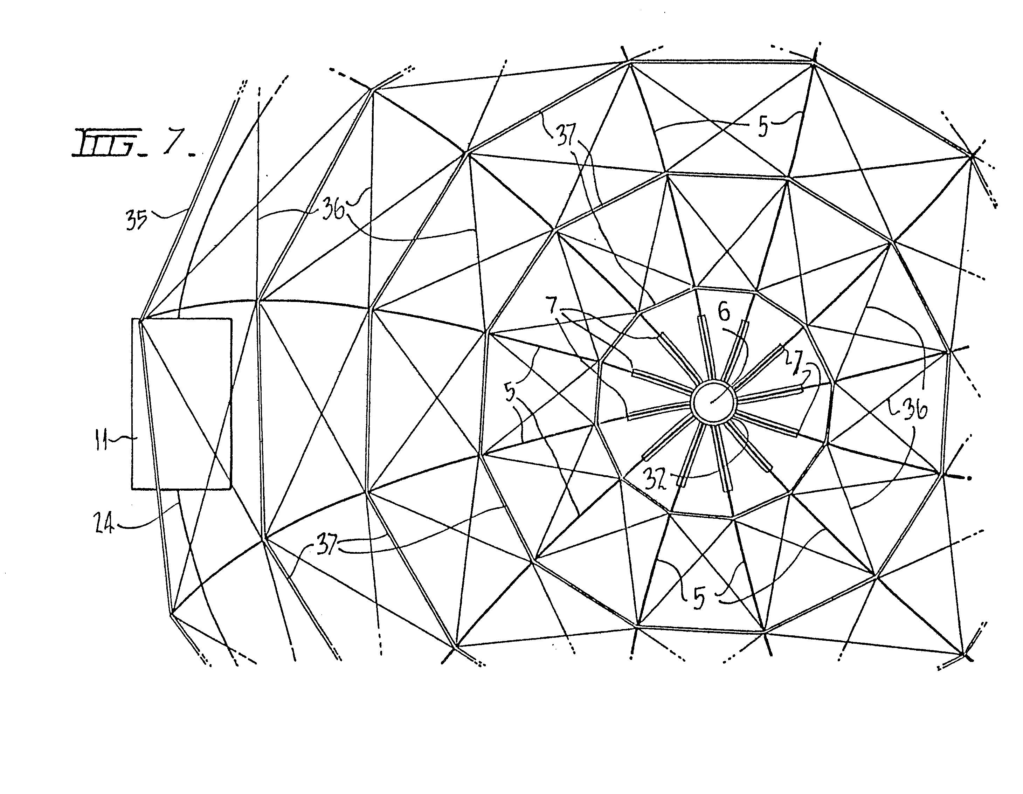

Die Elemente, die der Verspannung der Flügel des Flügelrades 5 untereinander dienen, sind in den Figuren 6 bis 8 dargestellt.

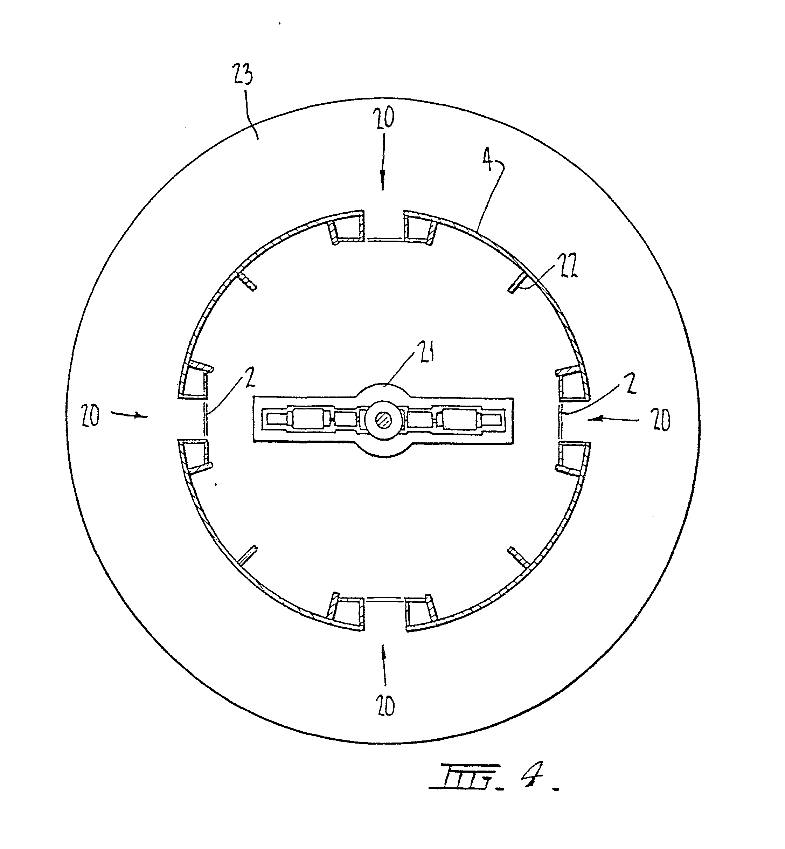

Figur 3 ist eine Seitenansicht der Vorrichtung der Erfindung. In dieser Ansicht sind besonders die äußere Oberfläche 18 des kuppelförmigen Gebäudes 3, eine Eingangstür 2 und Licht- und Belüftungsöffnungen 19 zu sehen. Der Aufbau des Flügelrades 5 zeigt eine einfache Ausführungsform; es sind die Krümmung der Flügel, die Schienen 16, auf denen sich die Flügel 5 auf dem kuppelförmigen Gebäude abstützen, die umlaufenden Verstärkungen 10 der Flügel 5 und Stahlseile 17, die der Versteifung der Flügel dienen, zu sehen. (Es sind der Übersichtlichkeit halber nur Seile zwischen den Oberkanten der Flügel dargestellt.

Figur 4 zeigt einen horizontalen Schnitt durch die Vorrichtung der Erfindung in Höhe der Linie 0-0 von Fig. 3. In Fig. 4 bedeuten 20 die Zugänge zum Inneren des kuppelförmigen Gebäudes 3. 21 ist eine Plattform, die vom Rest des Bodens isoliert ist und der Absorption der Vibrationen dient, die von der Drehbewegung des Flügelrades 5 ausgehen. Auf dieser Plattform befindet sich der Maschinensatz, nämlich das Getriebe 15, die Einrichtung zur Drehzahlsteuerung 14, die Generatoren 13 und die Wechselstromerzeuger 12.

Im Querschnitt durch den Aufbau des kuppelförmigen Gebäudes 3 sind horizontale Schnitte durch die Rippen 22 zu erkennen, die den Kuppelaufbau tragen, sowie die Abdeckung 4 der Kuppel.

Durch 23 wird eine rings um die Anlage vorgesehene ebene Fläche angedeutet, die den Zutritt des Windes zur Vorrichtung der Erfindung erleichtern soll.

Figur 5 stellt eine Aufsicht auf die Ausführungsform der Vorrichtung gemäß Fig. 1 und 3 dar. Zu erkennen sind die Schienen 16, auf denen die Flügel des Flügelrades 5 rollen und abgestützt sind. 24 bezeichnet den Umfang der Kuppel an ihrem Boden und 17 die Stahlseile, mit denen die Flügel des Flügelrades in der dargestellten einfachen Ausführungsform der Erfindung verspannt sind.

Figur 6 zeigt eine Aufsicht auf die Vorrichtung der Erfindung in Richtung der Achse des Flügelrades auf die in Figur 2 schematisch eingezeichnete Schnittfläche I-I, d.h. auf eine Fläche, die sich über der Unterkante der Flügel des Flügelrades 5 befindet.

In Figur 6 sind die Flügel des Flügelrades 5 und ihre beiderseitigen Verstärkungen 7 im Bereich nahe der Achse 6 im Querschnitt zu erkennen. Auf der Oberfläche 4 des kuppelförmigen Gebäudes 3 befinden sich nach Figur 6 vier konzentrisch angeordnete kreisförmige Schienen 16. Die Stellen, an denen die Unterkanten der Flügel die Schienen 16 kreuzen, sind in Figur 6 mit 30 bezeichnet. An diesen Stellen befinden sich die nachstehend im Zusammenhang mit den Figuren 9 bis 12 erläuterten Lauf-, Brems- und Festhalteeinrichtungen der Flügel des Flügelrades 5.

Jeder Flügel ist an seiner Unterkante mit den benachbarten Flügeln an den Stellen 30 durch starre Profile 29 mit U-förmigem Querschnitt verbunden und verspannt. Ferner befinden sich zwischen den Punkten 30 in gleicher Höhe die Stahlseile, die derart angeordnet sind, daß sie von einem Punkt 30 eines Flügels zu einem weiter außen oder weiter innen gelegenen Punkt 30 des Nachbarflügels verlaufen. Am äußeren Umfang der Unterkante der Flügel befindet sich schließlich noch ein weiteres starres Profil 31, das vorzugsweise aus Stahl besteht und die Form eines doppelten T aufweist. Der Kreis 25 stellt die Linie dar, die das äußere Ende der Unterkante der Flügel des Flügelrades 5 bei ihrer Drehung beschreibt.

Durch die Profile 29 und 31 sowie die Seile 17, welche sämtlich vorzugsweise aus Stahl bestehen, wird eine hervorragende Verbindung und Verspannung der Unterkanten der Flügel des Flügelrades 5 miteinander erreicht.

Mit 33 und 34 sind in Figur 6 die Kreise bezeichnet, welche die entsprechenden Punkte von Figur 2 bei ihrem Umlauf bilden. Mit 32 ist eine um die Achse 6 umlaufende Verstärkung in dem Bereich bezeichnet, in dem die Flügel des Flügelrades 5 mit ihr verbunden sind.

Figur 7 stellt eine ähnliche Aufsicht auf die Vorrichtung der Erfindung dar wie Figur 6, jedoch in Höhe der in Figur 2 schematisch eingezeichneten Schnittfläche II-II, d.h. auf eine Fläche, die sich etwas über der halben Höhe der Flügel des Flügelrades 5 befindet.

In halber Höhe sind die Flügel des Flügelrades 5 untereinander durch die Profile 35 und 37, vorzugsweise aus Stahl in Form eines Doppel-T, miteinander verbunden und verspannt. Ferner befinden sich in der gleichen Höhe zur weiteren Verspannung Seile 36, vorzugsweise aus Stahl, die benachbarte Flügel in analoger Weise miteinander verbinden, wie es im Zusammenhang mit der Unterkante der Flügel erläutert wurde.

Eine weitere Aufsicht auf die Vorrichtung der Erfindung zeigt Figur 8, jedoch in Höhe der in Figur 2 schematisch eingezeichneten Schnittfläche III-III, d.h. auf eine Fläche, die sich oberhalb der Oberkante der Flügel des Flügelrades 5 befindet.

In Figur 8 ist die gekrümmte Form der Flügel des Flügelrades 5 zu erkennen. In gleicher Weise wie an ihrer Unterkante und in mittlerer Höhe sind die Flügel des Flügelrades 5 an ihrer Oberkante durch Profile 38 und 40, vorzugsweise aus Stahl in Form eines Doppel-T miteinander verbunden und verspannt. Ferner dienen Seile 39 in analoger Weise wie an der Unterkante und in mittleren Höhe der weiteren Verspannung der Flügel miteinander an ihren Oberkanten.

In den Figuren 9 bis 12 ist eine Ausführungsform der erfindungsgemäßen Lauf-, Brems- und Festhalteeinrichtungen der Flügel des Flügelrades 5 dargestellt. Diese Einrichtungen umfassen die auf der Oberfläche des kuppelförmigen Gebäudes 3 befestigten kreisförmigen und konzentrisch angeordneten Schienen, die Laufräder der Flügel einschließlich ihrer Befestigung und die Brems- und Festhalteeinrichtungen. Die Figuren 9 bis 12 zeigen eine Ausführungsform dieser Einrichtungen in verschiedenen Schnitten.

Die Schienen 16 aus Stahl mit dem Profil eines Doppel-T sind auf der Oberfläche 4 des kuppelförmigen Gebäudes 3 mit Hilfe von Stahlplatten 72 und 73 und U-förmigen, in dem Stahlbeton eingelassenen Einrichtungen 74 verankert und mit Schrauben 76 befestigt. Die Stahlarmierung des kuppelförmigen Gebäudes 3 ist in Figur 9 mit 75 und die seine Dicke kennzeichnenden Linien mit 77 bezeichnet.

Den unteren Abschluß der eigentlichen Lauf-, Brems- und Festhalteeinrichtung bilden zwei Platten 43 aus Stahl, die senkrecht zur Fläche des Flügels über das Verstärkungsprofil 10 an dessen Unterkante befestigt sind. Die beiden Platten 43 weisen trapezförmige Oberfläche auf und sind mit den längeren der parallelen Seiten derart zueinander angeordnet, daß dazwischen ein Spalt entsteht, in dem sich der senkrechte Teil der Schiene 16 befindet. Der Spalt ist schmäler als der obere waagrechte Balken des Doppel-T-Profils der Schiene 16. Oberhalb der Platten 43 befindet sich in der Fläche des Flügels eine Aussparung, die in Figur 2 schematisch zu erkennen ist. Diese Aussparung nimmt die Lauf-, Brems- und Festhalteeinrichtung auf. Die Platten 43 verhindern ein Abheben der Flügel beim Auftreten starker Windstöße, da der schmale Spalt zwischen ihnen ein Anheben über das obere T der Schiene 16 nicht ermöglicht.

Senkrecht zu den Platten 43 sind als vordere und hintere Abdeckung der Lauf-, Brems- und Festhalteeinrichtungen Platten 48 vorgesehen, die einerseits mit den Platten 43 und andererseits mit dem Flügel 5 über dessen Verstärkungsprofile 42 und 49 durch Profile 52 bzw. 50 verbunden sind. Die senkrechten Platten 48 haben eine etwa quadratische Oberfläche mit einer Aussparung in dem Bereich der Schiene 16.

Etwa in 2/3 der Höhe der Platten 48 ist senkrecht zu diesen und parallel zu den Platten 43 eine obere Abdeckung 47 angeordnet und mit den Platten 48 fest verbunden. Zwischen dieser oberen Abdeckungsplatte 47 und den Platten 43 befindet sich die Halterung für das Laufrad 71. Diese besteht aus zwei Profilstücken 44 aus Gußstahl, die die Lager 70 des Laufrades 71 aufnehmen, mit dessen Hilfe der Flügel des Flügelrades 5 auf den Schienen 16 läuft und abgestützt wird. Die Achse 69 ist in Figur 9 der Klarheit wegen über die Lager und das Rad gezeichnet. Die Lauflager 70 der Achse 69, die sich innerhalb der Gußprofile 44 befinden, werden seitlich durch die Abdeckungen 68 und 79 abgeschlossen.

Die Stahlgußprofile 44 verlängern sich nach oben bis zu der oberen Abdeckungsplatte 47 in Form der Profile 46. An deren Außenseiten sind - verbunden mit diesen und der oberen Abdeckungsplatte 47 - U-förmige Profile 29, vorzugsweise aus Stahl, angebracht. Diese erstrecken sich über den Bereich der Lauf-, Brems- und Festhalteeinheit hinaus und verbinden den Flügel starr mit den Unterkanten der benachbarten Flügel; vgl. Figur 6.

Auf der Innenseite der Platten 48 sind je zwei Bremsbacken 51 angebracht. Diese sind um Achsen 56 drehbar angeordnet, welche außerhalb der Platten 48, die sie zusammenhalten, mit Scheiben 78 und Schrauben 67 verschraubt sind. Abstandshalter 53, 54 und 55 trennen die Bremsbacken 51 von den an der anderen Platte 48 befestigten entsprechenden Bremsbacken.

Die beiden Bremsbacken, die an einer Platte 48 angebracht sind, haben zusammen etwa die Form eines großen U, das in der Mitte des waagrechten Balkens unterbrochen ist. Dort verläuft der senkrechte Teil der Schiene 16. An den beiderseits der Schiene 16 einander sehr nahe gegenüberliegenden Enden der Bremsbacken 51 sind Bremsbeläge 61 angebracht. Dieser Teil der Bremsbacken 51 befindet sich unmittelbar oberhalb der Platten 43.

Am oberen Ende werden die Bremsbacken 51 durch Federn 62, die über Schrauben 63 mit ihnen verbunden sind, gegeneinander gezogen. Dies ist die Ruhestellung der Bremsbacken 51, in der die Bremsbeläge 61 nicht gegen die Seiten der Schiene 16 gedrückt werden.

Auf der Oberseite der oberen Abdeckungsplatte 47 befindet sich auf einer Platte 66, welche durch Schrauben 65 mit der Platte 47 verbunden ist, ein Hydraulikzylinder 57 mit zwei Kolben 58, die auf U-förmige Profile 59 Druck ausüben können. Die Schenkel der U-förmigen Profile 59 sind durch Achsen 60 mit den Bremsbacken 51 an deren Innenseite verbunden. Die Achsen 60 durchstoßen auch die Platten 48 und sind an deren Außenseite mit Scheiben 65 und Schrauben 64 befestigt.

Der Hydraulikzylinder 57 ist mit der zentralen Hydraulikeinrichtung 26 verbunden. Wenn über den Zylinder 57 und die Kolben 58 auf die U-förmigen Profile 59 Druck ausgeübt wird, dann bewegen sich diese voneinander weg. Da die Bremsbacken 51 mit den Profilen 59 fest verbunden sind, werden auch diese unter gleichzeitiger Spannung der Feder 62 in ihrem oberen Teil auseinanderbewegt. Dabei drehen sich die Bremsbacken 51 um die Achse 56, so daß sich ihre unteren Enden aufeinander zu bewegen, wobei schließlich die Bremsbeläge 61 gegen die Seiten der Schiene 16 gedrückt werden. Um die Auseinanderbewegung der Bremsbacken 51 in ihrem oberen Teil zu ermöglichen, sind in den Platten 48 zu diesem Zweck Aussparungen 81 vorgesehen. Die Drehbewegung der Achsen 60 wird durch Lager 82 ermöglicht, die sich in den U-förmigen Profilen 59 befinden. Zwischen den Profilen 59 und den Bremsbacken 51 befinden sich Beilagscheiben 80.

Das Beispiel erläutert die Erfindung.

B e i s p i e l

Eine für den praktischen Gebrauch bei der Erzeugung von elektrischer Energie aus Windenergie geeignete Vorrichtung hat die in den Figuren dargestellte Form. Das kuppelförmige Gebäude weist am Boden einen äußeren Durchmesser von 100 m und einen inneren Durchmesser von 84 m auf. Seine größte Höhe beträgt 27 m. Die Form der Flügel des Flügelrades ist der Krümmung des kuppelförmigen Gebäudes angepaßt. Der größte Durchmesser des Flügelrades beträgt 120 m. Die Flügel weisen eine Höhe von 20 m auf.

Auf der Oberfläche des kuppelförmigen Gebäudes befinden sich sieben konzentrisch angeordnete, kreisförmige Schienenstränge, der innerste hat einen Abstand von 15 m vom Mittelpunkt des kuppelförmigen Gebäudes. Der Abstand der Schienenstränge voneinander beträgt 5 m.

Das Flügelrad läuft mit Hilfe von Rollen mit einer Lauffläche aus Gummi auf den Schienen. Das Flügelrad besteht aus 12 Flügeln, die zusammen 84 Laufrollen aufweisen.

Durch die beschriebene Anordnung läßt sich eine verhältnismäßig geringe Reibung bei der Drehung des Flügelrades erreichen. Infolge seiner großen Dimension und der damit verbundenen erheblichen Masse besitzt das Flügelrad ausreichende Trägheit, um auch bei kurzfristigen Änderungen der Windstärke und -geschwindigkeit eine weitgehend gleichmäßige Drehbewegung beizubehalten.

Patentansprüche

1. Vorrichtung zur Erzeugung von elektrischer Energie aus Windenergie, g e k e n n z e i c h n e t durch ein kuppelförmiges Gebäude (3), auf dem sich ein Flügelrad (5) befindet, dessen vertikale Achse (6) das kuppelförmige Gebäude (3) an seiner höchsten Stelle durchstößt und die Bewegung des Flügelrades (5) auf eine Einrichtung zur Umwandlung der Bewegungsenergie des Flügelrades (5) in elektrische Energie überträgt, wobei zumindest die Unterkante der Flügel des Flügelrades (5) an die Krümmungsform des kuppelförmigen Gebäudes (3) angepaßt ist und die Flügel auf Schienen (16) abgestützt sind und von diesen gehalten werden, die am Aufbau des kuppelförmigen Gebäudes (3) derart verankert sind, daß sie konzentrische Kreise um dessen höchsten Punkt beschreiben.

2. Vorrichtung nach Anspruch 1, dadurch gekennzeichnet, daß die Einrichtung zur Umwandlung der Bewegungsenergie in elektrische Energie aus einem Getriebe (15), einer Einrichtung (14) zur automatischen Steuerung der Drehzahl und Generatoren (13) zur Erzeugung der elektrischen Energie besteht.

3. Vorrichtung nach Anspruch 1 oder 2, dadurch gekennzeichnet, daß die Flügel des Flügelrades (5) in Längs- und in Querrichtung gewölbt sind.

4. Vorrichtung nach Anspruch 1 bis 3, dadurch gekennzeichnet, daß die Flügel des Flügelrades (5) durch Profile (10), (42) und (49) verstärkt und durch Seile (17) miteinander verbunden und verspannt sind.

5. Vorrichtung nach Anspruch 4, dadurch gekennzeichnet, daß die Seile (17) sowohl zwischen den Oberkanten, dem mittleren Bereich und den Unterkanten der Flügel in gleichbleibender Höhe, als auch zwischen der Oberkante eines Flügels und dem mittleren Bereich der benachbarten Flügel sowohl zwischen dem mittleren Bereich eines Flügels und der Unterkante der benachbarten Flügel bzw. umgekehrt angebracht sind.

6. Vorrichtung nach Anspruch 1 bis 5, dadurch gekennzeichnet, daß sich die Flügel des Flügelrades (5) über Rollen (71) auf den Schienen (16) bewegen.

7. Vorrichtung nach Anspruch 1 bis 6, dadurch gekennzeichnet, daß die Rollen (71) Teil einer Lauf-, Brems- und Festhalteeinrichtung für die Flügel des Flügelrades sind.

8. Vorrichtung nach Anspruch 1 bis 7, dadurch gekennzeichnet, daß der äußere Umfang der Rollen (71), der mit den Schienen (16) in Berührung steht, aus Gummi ist.

9.   Verfahren nach Anspruch 6 bis 8, dadurch gekennzeichnet, daß die Lauf-, Brems- und Festhalteeinrichtungen der Flügel des Flügelrades (5) folgende Elemente umfassen:

     a)   zwei Platten (43), die senkrecht zur Unterkante des Flügels derart über das Profil (10)
          an diesem befestigt sind, daß zwischen ihnen
          ein Spalt frei bleibt, in dem die Schiene (16)
          verläuft, wobei der Spalt schmäler ist als das
          obere T der Schiene (16);

     b)   zwei Platten (48), parallel zur Fläche des Flügels angeordnet und über die Profile (42) und
          (49) an dessen Vorder- bzw. Rückseite befestigt;

     c)   eine obere Abdeckung (47), die mit den Platten
          (48) fest verbunden ist;

     d)   ein Laufrad (71), das zwischen den Platten (43),
          (48) und der Abdeckung (47) angeordnet ist,
          und

     e)   jeweils ein Paar Bremsbacken (51), drehbar befestigt an der dem Flügel zugewandten Seite
          der Platten (48), wobei sich die Bremsbeläge
          (61) oberhalb der Platten (43) beiderseits des
          senkrechten Teils der Schiene (16) befinden
          und durch eine hydraulische Einrichtung (57)
          bis (59) gegen diese gedrückt werden können.

10.  Vorrichtung nach einem der Ansprüche 2 bis 9, dadurch gekennzeichnet, daß dem Generator (13)
     Wechselstromerzeuger (12) nachgeschaltet sind.

*FIG. 1.*

*FIG. 3.*

Fig. 2.

0044390

*Fig. 4.*

FIG. 5.

_FIG. 6_

FIG. 7

FIG. 8.

38
18
39

39

11

40

40

18
38
24

40

40

39

39

8

0044390

4/m

8|11

Fig. 9

FIG. 10.

*FIG. 11*

FIG. 12.